# DEMANDE DE BREVET EUROPEEN

(11) **EP 0 767 149 A2**
(43) Date de publication de la demande: **09.04.1997**
(21) Numéro de dépôt: 96402615.7
(22) Date de dépôt: 13.12.1993
(51) Int. Cl.: C03C 27/04

(54) **Procédé de collage verre-metal par adhésif prégélifiable, et dispositif d'irradiation pour obtenir la prégélification**

(30) Priorité: 16.12.1992 FR 9215183
(62) Demande divisionnaire de: 93403002.4
(71) Demandeur: CECA S.A., F-92800 Puteaux (FR)
(72) Inventeur: Charriere, Bruno, 64110 Jurancon (FR); Charon, Bruno, 64230 Lescar (FR)

(57) **Abrégé**

Procédé de collage verre (4) sur métal (2) dans lequel on prégélifie très rapidement le joint de colle (3) par application simultanée à l'assemblage d'un rayonnement infrarouge et d'une haute fréquence, l'émetteur de haute fréquence (1) étant préférentiellement placé côté tôle et l'émetteur infrarouge (5) côté verre. Les adhésifs préférés pour cette application sont des compositions à la fois thermiquement prégélifiables et post-polymérisables sous l'influence de l'humidité ambiante, en particulier des compositions contenant un prépolymère polyuréthane dont les chaînes sont terminées en partie par des groupes acryliques, en partie par des groupements isocyanates libres. L'invention s'applique à l'assemblage des pare-brise, lunettes et custodes en verre émaillé sur les chaînes de montage de véhicules automobiles.

## Description

La présente invention se rapporte au domaine du collage du verre, en particulier du verre émaillé, sur des supports métalliques, et plus précisément sur des tôles, peintes ou non.

Les joints verre-métal doivent être à la fois souples et tenaces pour pouvoir résister aux contraintes mécaniques qui résultent inévitablement de la différence des coefficients d'expansion thermique des matériaux assemblés : en conséquence, leur module élastique doit être suffisamment faible et le rester sur tout l'intervalle de leurs températures d'utilisation. Ils doivent développer une adhésion suffisante, si possible avec un faciès de rupture cohésive, aussi bien sur la tôle que sur le verre. Du fait de la transparence de l'un des substrats, ils doivent également résister au vieillissement photochimique. Ils doivent enfin présenter des caractéristiques de mise en oeuvre répondant aux exigences de la production de masse. Ces exigences se manifestent avec une importance toute particulière dans l'industrie automobile pour le montage des pare-brise collés.

Les techniques actuellement envisagées consistent à former les joints verre-métal avec des adhésifs monocomposants et à provoquer le développement de leur cohésion grâce à une élévation rapide de la température. Cette élévation de température peut être obtenue soit par chauffage classique (étuvage), soit grâce à une technique de mise en oeuvre rapide telle que l'hystérèse diélectrique (PDHF), l'induction électromagnétique (IHF), les micro-ondes, ou encore le chauffage par rayonnement infrarouge (IR) court ou long. Le choix de la méthode de mise en oeuvre dépend essentiellement de la nature des substrats (conducteurs, isolants, transparents, opaques), de leur géométrie, de l'épaisseur du joint de colle, et évidemment du délai dans lequel l'assemblage collé doit pouvoir être manipulé.

Par exemple, dans le cas du chauffage par hystérèse diélectrique, il est impératif que les deux substrats soient des isolants électriques. En outre, l'épaisseur du joint de colle et celle des substrats doivent être constantes, et la totalité de la partie collée de l'assemblage doit pouvoir être introduite entre les deux électrodes de l'applicateur PDHF, ce qui impose des restrictions géométriques aux types d'assemblages réalisables par cette technique.

On souhaite, pour des raisons évidentes d'optimisation et de rentabilisation des chaînes d'assemblage, que ce délai de prise soit bref. Lorsqu'il s'agit de collage de pare-brise de véhicules automobiles, on souhaite même qu'il soit très bref, d'environ la minute, avec des joints épais de quelques millimètres : ce problème n'a pas encore, semble-t-il, reçu de solution satisfaisante, puisqu'en pratique, on continue à réaliser les montages avec des adhésifs simplement réticulables à l'ambiante et qu'on les maintient en place jusqu'à un durcissement suffisant à l'aide de rubans adhésifs, ou d'autres dispositifs temporaires de fixation.

Le brevet WO 8.809.712 (Teroson GmbH) divulgue une solution pour obtenir un chauffage localisé suffisamment rapide du joint adhésif, qui fait appel à la dissipation de micro-ondes focalisées au sein du joint adhésif par le jeu de guides d'ondes et de réflecteurs : mais elle exige d'une part, un matériel de projection des ondes d'un réglage extrêmement délicat et d'autre part, une installation de sécurité excluant toute exposition du personnel aux fuites de rayonnement. La technique PDHF est inapplicable au chauffage des systèmes verre/métal puisque l'un des substrats est métallique. L'inconvénient majeur du chauffage par IHF est que l'on ne chauffe directement que le métal (effet Joule dû aux courants de Foucault développé au sein du métal), à partir duquel l'adhésif n'est chauffé que par conduction. Pour qu'il puisse prégélifier correctement, il faut que la température atteigne 120 à 140°C à travers les 4 mm du joint, jusqu'à l'interface colle/verre, le verre restant froid. Dans le meilleur des cas, la prégélification ne peut y être obtenue que sur une épaisseur allant jusqu'à 2 mm ; au-delà, l'effet radiateur du verre froid empêche la réaction de se produire à son contact immédiat, ce qui rend la prégélification inopérante. Lorsque l'épaisseur du joint dépasse 2 mm, la prégélification ne peut plus être obtenue dans toute l'épaisseur de l'adhésif. On ne peut pas mieux prégélifier dans toute leur épaisseur les joints de colle des assemblages verre/métal de plus de 2 mm par rayonnement infrarouge.

La présente invention remède à ces inconvénients. C'est un procédé de réalisation d'assemblage verre métal avec un joint épais d'une substance de consistance finale élastomère, qui consiste à préassembler un système verre-adhésif-métal et à provoquer la prégélification de l'adhésif par application simultanée d'un rayonnement infrarouge intense côté verre, et d'un champ électromagnétique de haute fréquence provoquant l'échauffement du métal par induction. La position exacte de l'élément inducteur de l'applicateur n'est pas critique. Il sera cependant disposé de préférence à proximité de l'assemblage, côté métal ; il peut toutefois être disposé côté verre, ou bien encore tout autour de l'assemblage qui se trouve alors disposé à l'intérieur d'un solénoïde. Les seules restrictions sont que d'une part, le dispositif inducteur ne s'interpose pas entre la source infrarouge et la surface du verre et d'autre part, que la partie du substrat métallique qui doit être soumise à l'échauffement soit localisée dans une zone où le champ électromagnétique généré par l'élément inducteur est suffisamment intense pour que la température requise (par exemple 150°C) soit atteinte dans le délai imparti.

On peut ainsi développer une température quasi uniforme de 150°C dans toute l'épaisseur d'un joint de colle de 4 mm en moins de 30 secondes. Ce procédé présente l'avantage unique de chauffer à la fois l'adhésif et les deux substrats, ce qui facilite considérablement le mouillage, et améliore l'adhésion, notamment à l'interface verre-joint.

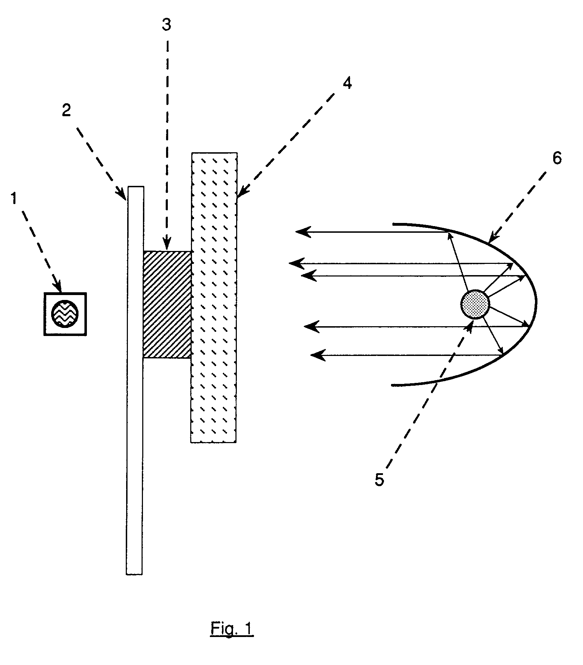

Pour la mise en oeuvre du procédé selon l'invention, le dispositif de double distribution de l'énergie comprend (figure 1) :
- une bobine d'induction (1), alimentée par un générateur H.F de fréquence comprise entre 30 et 300 kHz, de puissance 12 et 50 kW, et d'un dispositif d'autorégulation de la puissance émise. Cet inducteur est le plus souvent un élément de section carrée ou rectangulaire réalisé en cuivre ou en laiton, avec système intégré de circulation d'eau de refroidissement localisé de préférence du côté du substrat métallique (2) ;
- un émetteur de rayonnement infrarouge (5) restituant une puissance comprise entre 5 et 55 kW/m², de longueur d'onde comprise entre 0,76 et 2,5 µm, de préférence entre 0,76 et 1,5 µm. Cet émetteur infrarouge, généralement une rampe infrarouge en quartz, est situé à proximité immédiate du périmètre du vitrage à coller (4). L'élément rayonnant est muni d'un réflecteur parabolique (6) permettant de focaliser l'énergie infrarouge sur la partie du substrat en verre au contact avec l'adhésif (3).

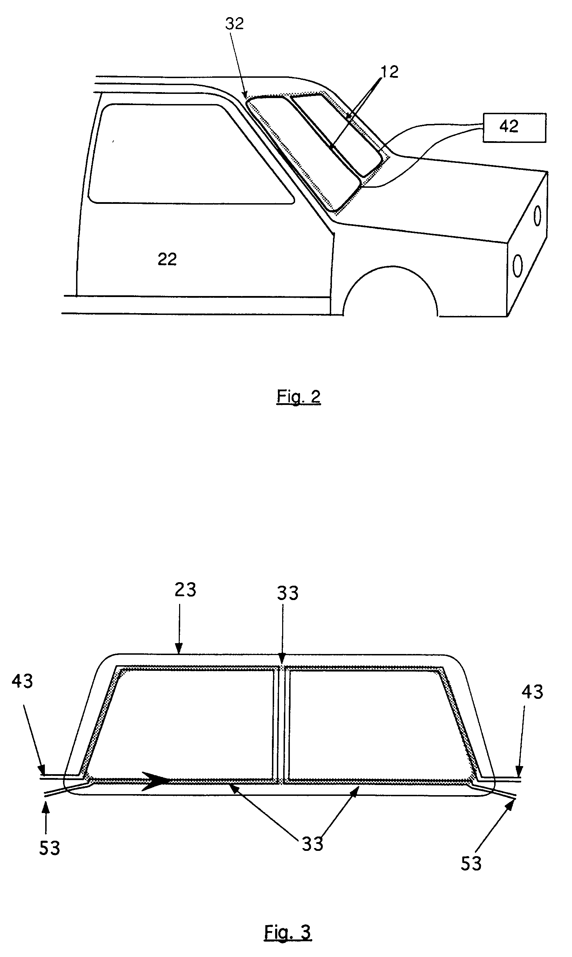

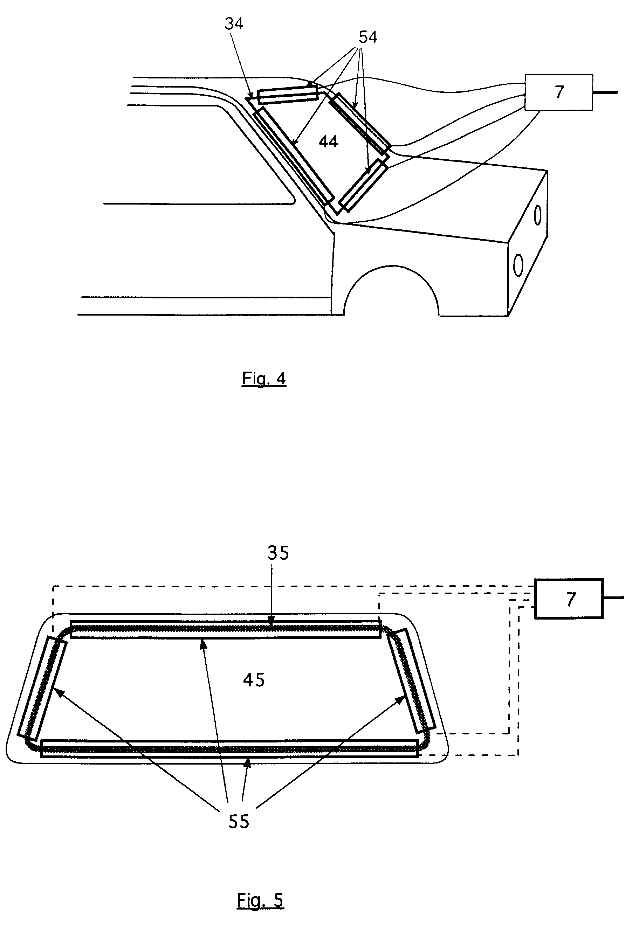

Sur les chaînes de montage d'automobiles (collage de custode, de lunette arrière ou de pare-brise), on trouve ainsi (figure 2) les inducteurs (12) disposés à l'intérieur de la carrosserie (22) et suivant le périmètre (32) du joint de colle, couplés à un ensemble (42) générateur H.F. et d'alimentation en eau de refroidissement. S'il s'agit de vitrage de petites dimensions, par exemple custode latérale, un seul inducteur est généralement nécessaire. Pour le collage des pare-brise, les dimensions importantes d'un inducteur unique rendent difficile son introduction à l'intérieur de la carrosserie par le bras d'un robot : on peut, comme schématisé sur la figure 3, remplacer l'inducteur unique par deux éléments collatéraux (33) également disposés face à la carrosserie (23) à l'aplomb du joint de colle (33) ; (43) et (53) représentent schématiquement les alimentations simultanées en courant haute fréquence et en eau de refroidissement. A l'extérieur du véhicule, on trouve (figures 4 et 5) les cassettes de chauffage infrarouge (54-55) disposées le long du périmètre de la vitre (44-45) en regard du joint de colle (34-35), et un variateur de puissance (7), associé le cas échéant à un dispositif régulateur de température.

Le procédé selon l'invention s'applique au collage des verres émaillés sur des tôles nues ou peintes. Dans le cas du collage des vitrages sur les véhicules automobiles, le verre est maintenant systématiquement recouvert d'une fine couche d'émail opaque, noir le plus souvent. A l'origine, cette couche d'émail était destinée à protéger, au moins partiellement, le joint adhésif contre le vieillissement photochimique. En effet, les adhésifs couramment utilisés dans ce domaine étant de nature aromatique, sont particulièrement sensibles au vieillissement sous l'effet de la lumière solaire. L'émail opaque était initialement destiné à assurer partiellement cette fonction protectrice : s'y ajoute maintenant une fonction esthétique imposée par les concepteurs de véhicules qui généralise l'utilisation de ces vitrages émaillés.

Au sens de la présente invention, on entend par prégélification un durcissement partiel de l'adhésif. On considère que l'adhésif est prégélifié lorsque le nombre de fonctions réactives y ayant réagi est tel que le polymère ainsi obtenu forme un réseau tridimensionnel, donc infusible et insoluble, et qu'en pratique, il a développé une cohésion suffisante pour assurer la manipulation du joint. La résistance au cisaillement nécessaire pour que l'assemblage soit manipulable dépend évidemment de la géométrie et du poids de l'assemblage. Toutefois, dans la majorité des cas, cette manipulation est assurée dès que la résistance au cisaillement est supérieure à environ 0,3 MPa. Un moyen pratique, parmi d'autres, pour tester la prégélification de l'adhésif, consiste ainsi à mesurer la résistance au cisaillement de l'assemblage après qu'il ait été soumis au cycle de prégélification, et à s'assurer qu'elle atteint ou excède la valeur de ,3 MPa.

La nature de l'adhésif constituant le joint n'est pas indifférente, puisque le procédé prévoit la mise en oeuvre d'un joint adhésif susceptible, dans un premier temps, d'être très rapidement prégélifié par action thermique, et apte à subir postérieurement une évolution selon un mécanisme, thermique ou autre, qui le conduira à son état de durcissement définitif.

Ces exigences sont satisfaites avec les mastics à base de prépolymères polyuréthanes purs auxquels on a eu recours dans les exemples, non limitatifs, qui sont présentés pour illustrer et mieux faire comprendre l'invention. Ce sont des mastics à base de prépolymères polyuréthanes dont les extrémités de chaînes sont constituées partiellement de groupements isocyanates libres et partiellement de groupements acryliques. Ils sont effectivement prégélifiables thermiquement, et spontanément post-polymérisables sous l'effet de l'humidité ambiante. Le post-durcissement par l'humidité des adhésifs prégélifiés est d'une grande simplicité et d'une grande efficacité : il offre l'avantage supplémentaire d'assurer partout dans le joint adhésif un minimum de durcissement final, même s'il existe des zones qui ont échappé à une prégélification complète. D'autres adhésifs prégélifiables et autrement post-polymérisables peuvent néanmoins être utilisés sans altérer l'invention.

### EXEMPLES

Ils ont été réalisés à l'aide d'appareillages de laboratoire sur des éprouvettes représentatives des substrats utilisés dans l'industrie automobile (carrosseries et vitrages). Ces substrats présentent les caractéristiques ci-après :
- Substrat verre : stérigmes en verre trempé d'épaisseur 4 mm, de dimensions 50 X 140 mm, recouvert d'une couche d'émail noir sérigraphié d'épaisseur 20 µm,
- Substrat tôle : stérigmes en tôle d'acier d'épaisseur 0,7 mm, de dimensions 25 X 100 mm, recouverte d'une couche de peinture de finition.
   Avant application de l'adhésif, les substrats sont essuyés à l'aide d'un tissu imbibé d'acétone et séchés à l'air libre. L'adhésif est appliqué sur la face sérigraphiée du verre, entre deux cales parallèles de PTFE d'épaisseur 4 mm, séparées par un espace de 12,5 mm. On obtient ainsi, après accostage du stérigme métallique, un joint de dimensions standard 12,5 X 25 mm, d'épaisseur 4 mm.

L'adhésif utilisé ici est constitué d'un prépolymère uréthane basé sur un diol de masse moléculaire 2000, et dont la température de transition vitreuse est de - 86°C. Sa composition exacte exprimée en parties en poids est la suivante :

| | |
|---|---|
| Polytétraméthylène-glycol (Mw = 2000) | 53,54 parties |
| 4,4'-bis(Hydroxyméthyl)cyclohexane | 3,85 |
| Diisocyanate d'isophorone | 32,75 |
| Acrylate d'hydroxyéthyle | 7,31 |
| p-Benzoquinone | 0,053 |
| Phénothiazine | 0,0021 |
| Dibutyldilaurate d'étain | 0,021 |
| Triéthylènediamine | 0,105 |

Les produits sont mélangés puis portés à 80°C sous azote, pendant environ 2 heures, jusqu'à ce que la teneur massique en isocyanates soit constante (4,5 %). On refroidit le prépolymère à 25°C et formule le mastic adhésif par addition des composés suivants :

| | |
|---|---|
| Perbenzoate de tertiobutyle | 2,10 |
| Carbonate de calcium stératé | 16,20 |
| Oxyde de calcium | 3,00 |
| Sulfate de baryum | 7,50 |
| Tamis moléculaire (déshydratant) | 7,50 |
| Silice pyrogénée | 3,00 |
| Diméthacrylate de triéthylèneglycol | 5,25 |
| Isocyanate de tosyle | 0,30 |
| Aminosilane | 1,50 |
| Plastifiant (quaterphényls hydrogénés) | 6,00 |

La formulation est dégazée sous un vide d'envron 500 Pa (4 torrs) et conditionnée dans des cartouches étanches à l'humidité.

### Exemple 1 : essai de chauffage par infrarouge seul (comparatif) :

Un pavé d'adhésif de dimensions 25 X 12,5 X 4 mm est appliqué sur la face sérigraphiée d'un stérigme en verre et recouvert d'un stérigme métallique. Divers essais successifs sont réalisés dans lesquels la température du joint de colle est mesurée au moyen d'un thermocouple placé dans l'adhésif, soit au contact du verre, soit au contact du métal. L'assemblage maintenu en position horizontale est soumis à un rayonnement infrarouge court de spectre 0,76 à 1,5 µm, de densité de puissance 50 kW/m², pendant une durée variable. Les résultats des mesures de températures sont rassemblés dans le tableau ci-dessous.

| Durée d'exposition | Température au contact du verre | Température au contact du métal |
|---|---|---|
| 30s | 140°C | - |
| 30s | - | 80°C |
| 37s | 160°C | - |
| 90s | adhésif brûlé | 120°C |
| 120s | adhésif brûlé | 160°C |

Jusqu'à une durée de 37 secondes d'exposition au rayonnement infrarouge seul, l'adhésif n'est prégélifié que sur la moitié de son épaisseur, soit environ 2 mm. Pour atteindre, côté métal, une température suffisante pour la prégélification de l'adhésif, il faudrait poursuivre l'irradiation pendant plus de 90 secondes, mais alors la pyrolyse de l'adhésif côté verre émaillé survient avant ce délai.

### Exemple 2 : essai de chauffage par induction électromagnétique seule (comparatif) :

Le même assemblage que celui de l'exemple 1 est fixé à proximité de la bobine d'induction d'un générateur H.F. Le générateur est muni d'un système de régulation de température à pyromètre infrarouge mesurant la température du stérigme métallique à l'emplacement du joint de colle. L'inducteur est réglé pour une température de palier de 160°C. La montée à cette température s'effectue en 5 secondes.

Dans un premier essai, un assemblage est soumis au champ H.F. pendant 30 secondes (soit 5 secondes de montée, et 25 secondes à 160°C). Après refroidissement, le joint est examiné. Il apparaît que l'adhésif n'est prégélifié que sur une épaisseur d'environ 2 mm.

On répète l'expérience sur un autre assemblage en prolongeant la durée de chauffage du métal jusqu'à 180 secondes. Après refroidissement, l'assemblage se désolidarise sous l'action de son propre poids. L'examen du joint montre que celui-ci a correctement prégélifié sur la quasi-totalité de son épaisseur, sauf au contact immédiat du verre, où un film d'adhésif est resté liquide, rendant la prégélification inopérante, même après une durée de chauffage aussi longue que 3 minutes, durée déjà rédhibitoire au regard des cadences des chaînes de montage.

### Exemple 3 : essai de chauffage sur verre non émaillé (comparatif) :

L'essai de l'exemple 1 est reproduit, à la différence que le verre utilisé est du verre trempé ordinaire, non émaillé. Après 30 secondes d'irradiation infrarouge, l'adhésif n'est pas du tout prégélifié : la verre non émaillé n'a pas participé à l'absorption du rayonnement infrarouge et n'a pas transmis de chaleur par conduction à l'adhésif.

### Exemple 4 : essai combiné infrarouge/induction (selon l'invention) :

On reproduit l'exemple 2, mais en irradiant le stérigme en verre avec le rayonnement infrarouge de l'exemple 1. L'irradiation infrarouge et le champ haute fréquence sont appliqués simultanément pendant 30 secondes, l'inducteur étant réglé pour une température de palier de 160°C. Après refroidissement, l'assemblage est parfaitement manipulable. Sa résistance au cisaillement par traction, mesurée à l'aide d'un dynamomètre à une vitesse de traction de 2 mm/min, est de 2,85 MPa. Non seulement l'adhésif est correctement prégélifié sur toute son épaisseur, mais encore la résistance au cisaillement obtenue après seulement 30 secondes de prégélification combinée selon l'invention est-elle très largement supérieure au minimum nécessaire pour assurer la manipulabilité de l'assemblage.

Le même essai est reproduit, à la différence qu'une fois le cycle de prégélification exécuté, on abandonne l'assemblage pendant 7 jours à l'atmosphère à 23°C. La post-réticulation spontanée de l'adhésif sous l'effet de l'humidité ambiante s'opère et la résistance au cisaillement s'élève à 4,5 MPa.

## Revendications

1. Dispositif pour la distribution d'énergie dans un joint d'auto-adhésif thermiquement prégélifiable, comprenant :
- une bobine d'induction, alimentée par un générateur de haute fréquence comprise entre 30 et 300 kHz, situé indifféremment de part ou d'autre de l'assemblage verre/métal ;
- un émetteur de rayonnement infrarouge de longueur d'onde comprise entre 0,76 et 5 µm, de préférence entre 0,76 et 1,5 µm, situé à proximité immédiate du périmètre du vitrage à coller.

2. Dispositif de distribution d'énergie selon la revendication 1, caractérisé en ce que la bobine d'induction est localisée du côté du substrat métallique.

3. Dispositif de distribution d'énergie selon la revendication 1, caractérisé en ce que l'élément rayonnant est muni d'un réflecteur permettant de focaliser l'énergie infrarouge sur la partie du substrat en verre au contact avec l'adhésif.
